# EUROPEAN PATENT APPLICATION

(11) **EP 1 287 883 A2**
(43) Date of publication of application: **05.03.2003**
(21) Application number: 02078433.6
(22) Date of filing: 19.08.2002
(51) Int. Cl.: B01J 19/00

(54) **Coating composition and random array of microspheres**

(30) Priority: 29.08.2001 US 942241
(71) Applicant: EASTMAN KODAK COMPANY, Rochester, New York 14650 (US)
(72) Inventor: Chari, Krishan, Rochester, New York 14650-2201 (US); Qiao, Tiecheng A., Rochester, New York 14650-2201 (US); Vizard, Douglas Lincoln, Rochester, New York 14650-2201 (US)
(74) Representative: Parent, Yves

(57) **Abstract**

A coating composition for making a microarray comprising: a gelling agent or a precursor to a gelling agent and microspheres dispersed in a fluid; wherein, upon coating the composition on a substrate, said microspheres become immobilized in the plane of coating and form a random pattern on the substrate. The substrate is characterized by an absence of specific sites capable of interacting physically or chemically with the microspheres.

## Description

### FIELD OF THE INVENTION

The present invention concerns biological microarray technology in general. In particular, it concerns a microarray coated on a substrate that contained no designated sites prior to coating.

### BACKGROUND OF THE INVENTION

Ever since it was invented in the early 1990s (Science, 251, 767-773, 1991), high-density arrays formed by spatially addressable synthesis of bioactive probes on a 2-dimensional solid support has greatly enhanced and simplified the process of biological research and development. The key to current microarray technology is deposition of a bioactive agent at a single spot on a microchip in a "spatially addressable" manner.

Current technologies have used various approaches to fabricate microarrays. For example, U.S. Patent Nos. 5,412,087, and 5,489,678 demonstrate the use of a photolithographic process for making peptide and DNA microarrays. The patent teaches the use of photolabile protecting groups to prepare peptide and DNA microarrays through successive cycles of deprotecting a defined spot on a 1cm x 1cm chip by photolithography, then flooding the entire surface with an activated amino acid or DNA base. Repetition of this process allows construction of a peptide or DNA microarray with thousands of arbitrarily different peptides or oligonucleotide sequences at different spots on the array. This method is expensive. An ink jet approach is being used by others (e.g., U.S. Patent Nos. 6,079,283; 6,083,762; and 6,094,966) to fabricate spatially addressable arrays, but this technique also suffers from high manufacturing cost in addition to the relatively large spot size of 40 to 100 µm. Because the number of bioactive probes to be placed on a single chip usually runs anywhere from 1000 to 100000 probes, the spatial addressing method is intrinsically expensive regardless how the chip is manufactured. An alternative approach to the spatially addressable method is the concept of using fluorescent dye-incorporated polymeric beads to produce biological multiplexed arrays. U.S. Patent No 5,981,180 discloses a method of using color coded beads in conjunction with flow cytometry to perform multiplexed biological assay. Microspheres conjugated with DNA or monoclonal antibody probes on their surfaces were dyed internally with various ratios of two distinct fluorescence dyes. Hundreds of "spectrally addressed" microspheres were allowed to react with a biological sample and the "liquid array" was analyzed by passing a single microsphere through a flow cytometry cell to decode sample information. U.S. Patent No. 6,023,540 discloses the use of fiber-optic bundles with pre-etched microwells at distal ends to assemble dye loaded microspheres. The surface of each spectrally addressed microsphere was attached with a unique bioactive agent and thousands of microspheres carrying different bioactive probes combined to form "beads array" on pre-etched microwells of fiber optical bundles. More recently, a novel optically encoded microsphere approach was accomplished by using different sized zinc sulfide-capped cadmium selenide nanocrystals incorporated into microspheres (Nature Biotech. 19, 631-635, (2001)). Given the narrow band width demonstrated by these nanocrystals, this approach significantly expands the spectral barcoding capacity in microspheres.

Even though the "spectrally addressed microsphere" approach does provide an advantage in terms of its simplicity over the old fashioned "spatially addressable" approach in microarray making, there are still needs in the art to make the manufacture of biological microarrays less difficult and less expensive.

### SUMMARY OF THE INVENTION

The present invention provides a coating composition for making a microarray comprising: a gelling agent or a precursor to a gelling agent and microspheres dispersed in a fluid; wherein, upon coating the composition on a substrate, said microspheres become immobilized in the plane of coating at random positions on the substrate. The substrate of the invention is characterized by an absence of specific sites capable of interacting physically or chemically with the microspheres.

The present invention also provides a microarray comprising: a substrate coated with a composition comprising microspheres dispersed in a fluid containing a gelling agent or a precursor to a gelling agent, wherein the microspheres are immobilized at random positions on the substrate. The substrate is free of receptors designed to physically or chemically interact with the microspheres.

The invention utilizes a unique coating composition and technology to prepare a microarray on a substrate that need not be pre-etched with microwells or premarked in any way with sites to attract the microspheres, as disclosed in the art. By using unmarked substrates or substrates that need no precoating preparation, the present invention provides a huge manufacturing advantage compared to the existing technologies. The invention discloses a method whereby color addressable mixed beads in a unique composition are randomly distributed on a substrate that has no wells or sites to attract the microspheres.

The present invention provides a microarray that is less costly and easier to prepare than those previously disclosed because the substrate does not have to be modified; nevertheless the microspheres remain immobilized on the substrate.

### BRIEF DESCRIPTION OF THE DRAWINGS

Figure 1 is a diagram of a coating device.
Figures 2A and 2B show micrographs, obtained under high magnification, of coatings with (Figure 2A) and without (Figure 2B) a gelling agent.

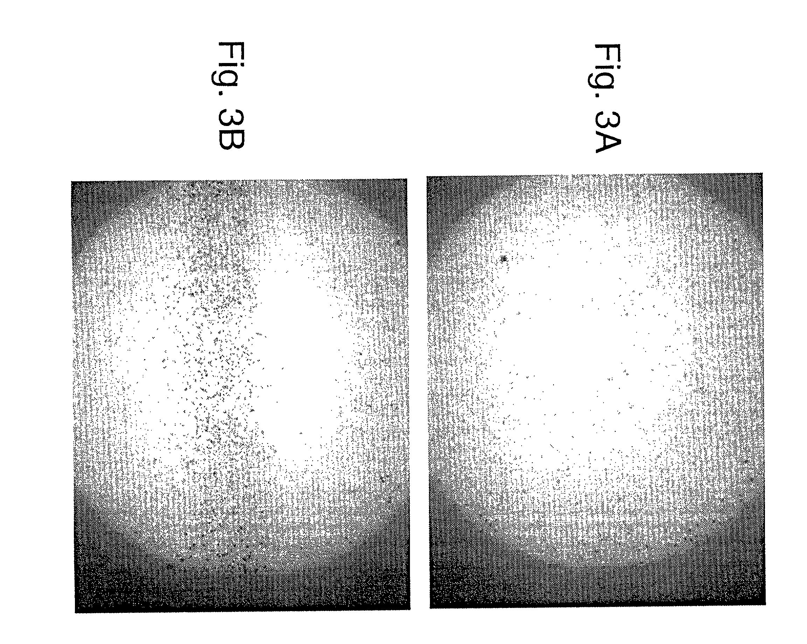

Figures 3A and 3B show micrographs, obtained under low magnification, of coatings with (Figure 3A) and without (Figure 3B) a gelling agent.
Figures 4A and 4B show application of Poisson statistics for a random distribution to coating prepared with a gelling agent.
Figures 5A and 5B show application of Poisson statistics for a random distribution to coating prepared without a gelling agent.

### DETAILED DESCRIPTION OF THE INVENTION

As used herein, the term "sol-to-gel transition" or "gelation" means a process by which fluid solutions or suspensions of particles form continuous three-dimensional networks that exhibit no steady state flow. This can occur in polymers by polymerization in the presence of polyfunctional monomers, by covalent cross-linking of a dissolved polymer that possesses reactive side chains and by secondary bonding, for example, hydrogen bonding, between polymer molecules in solution. Polymers such as gelatin exhibit thermal gelation that is of the latter type. The process of gelation or setting is characterized by a discontinuous rise in viscosity. (See, P.I. Rose, "The Theory of the Photographic Process", 4^{th} Edition, T.H. James ed. pages 51 to 67).

As used herein, the term "gelling agent" means a substance that can undergo gelation as described above. Examples include materials such as gelatin, water-soluble cellulose ethers or poly(n-isopropylacrylamide) that undergo thermal gelation or substances such as poly(vinyl alcohol) that may be chemically cross-linked by a borate compound. Other gelling agents may be polymers that may be cross-linked by radiation such as ultraviolet radiation. Examples of gelling agents include acacia, alginic acid, bentonite,carbomer, carboxymethylcellulose sodium, cetostearyl alcohol, colloidal silicon dioxide, ethylcellulose, gelatin, guar gum, hydroxyethylcellulose, hydroxypropyl cellulose, hydroxypropyl methylcellulose, magnesium aluminum silicate, maltodextrin, methylcellulose, polyvinyl alcohol, povidone, propylene glycol alginate, sodium alginate, sodium starch glycolate, starch, tragacanth and xanthum gum. (For further discussion on gelling agents, see, accompanying reference Secundum Artem, Vol. 4, No. 5, Lloyd V. Allen). A preferred gelling agent is alkali pretreated gelatin.

As used herein, the term "random distribution" means a spatial distribution of elements showing no preference or bias. Randomness can be measured in terms of compliance with that which is expected by a Poisson distribution.

The present invention teaches a composition and a method for making a random array of microspheres, also referred to as "beads", on a substrate. The distribution or pattern of the microspheres on the substrate is entirely random and the microspheres are not attracted or held to sites that are premarked or predetermined on the substrate as in other methods previously disclosed. In the present invention, the microspheres are immobilized randomly when the gelling agent in which they are carried undergoes a sol-to-gel transition.

The invention discloses a polymeric latex bead based random microarray with each bead in the array having a distinct signature that would distinguish the bead. Such a signature may be based on color, shape or size of the bead. For signatures based on color, the color may be derived from mixing three dyes representing the primary colors R, G, B to create thousands of distinguishable beads with distinct "color addresses" (unique RGB values, e.g. R=0, G=204, B=153). The beads can be made with sites on their surface that are "active", meaning that at such sites physical or chemical interaction can occur between the bead and other molecules or compounds. Such compounds may be organic or inorganic. Usually, the molecule or compound is organic―nucleic acid, protein or fragments thereof, are examples. To the surface of each color coded bead may be attached a pre-synthesized oligonucleotide, a monoclonal antibody, or any other biological agents. Therefore, each color address can correspond to a specific bioactive probe. These beads may be mixed in equal amounts, and the random microarray fabricated by coating the mixed beads in a single or multilayer format.

Coating methods are broadly described by Edward Cohen and Edgar B. Gutoff in Chapter 1 of "Modern Coating And Drying Technology", (Interfacial Engineering Series; v.1), (1992), VCH Publishers Inc., New York, NY. For a single layer format, suitable coating methods may include dip coating, rod coating, knife coating, blade coating, air knife coating, gravure coating, forward and reverse roll coating, and slot and extrusion coating.

Fluorescently/chemiluminescently labeled biological sample can be hybridized to the bead based random microarray. The signals from both "color addressable" polymeric beads and biological sample non-selectively labeled with fluorescence/chemiluminescence may be analyzed by a charge coupled device after image enlargement through an optical system. The recorded array image can be automatically analyzed by an image processing algorithm to obtain bioactive probe information based on the RGB color code of each bead, and the information compared to the fluorescence/chemiluminescence image to detect and quantify specific biological analyte materials in the sample. Optical or other electromagnetic means may be applied to ascertain signature.

Although microspheres or particles having a substantially curvilinear shape are preferred because of ease of preparation, particles of other shape such as ellipsoidal or cubic particles may also be employed. Suitable methods for preparing the particles are emulsion polymerization as described in "Emulsion Polymerization" by I. Piirma, Academic Press, New York (1982) or by limited coalescence as described by T. H. Whitesides and D. S. Ross in J. Colloid Interface Science, vol. 169, pages 48-59, (1985). The particular polymer employed to make the particles or microspheres is a water immiscible synthetic polymer that may be colored. The preferred polymer is any amorphous water immiscible polymer. Examples of polymer types that are useful are polystyrene, poly(methyl methacrylate) or poly(butyl acrylate). Copolymers such as a copolymer of styrene and butyl acrylate may also be used. Polystyrene polymers are conveniently used. The formed microsphere is colored using an insoluble colorant that is a pigment or dye that is not dissolved during coating or subsequent treatment. Suitable dyes may be oil-soluble in nature. It is preferred that the dyes are non-fluorescent when incorporated in the microspheres.

The microspheres are desirably formed to have a mean diameter in the range of 1 to 50 microns; more preferably in the range of 3 to 30 microns and most preferably in the range of 5 to 20 microns. It is preferred that the concentration of microspheres in the coating is in the range of 100 to a million per cm², more preferably 1000 to 200,000 per cm² and most preferably 10,000 to 100,000 per cm².

The attachment of bioactive agents to the surface of chemically functionalized microspheres can be performed according to the published procedures in the art (Bangs Laboratories, Inc, Technote #205). Some commonly used chemical functional groups include, but not limited to, carboxyl, amino, hydroxyl, hydrazide, amide, chloromethyl, epoxy, aldehyde, etc. Examples of bioactive agents include, but are not limited to, oligonucleotides, DNA and DNA fragments, PNAs, peptides, antibodies, enzymes, proteins, and synthetic molecules having biological activities.

### EXAMPLES

### EXAMPLE 1

This example illustrates the influence of the polymer on gelation or sol-to-gel transition of a formulation containing colored microspheres or beads.

Twenty four grams of a 4% aqueous suspension of polystyrene beads prepared by emulsion polymerization and having a mean size of 9.5 micrometers was combined with 0.48 grams of poly(vinyl alcohol)(75% hydrolyzed, molecular weight 2000).

A suspension of magenta colored beads was prepared by first dissolving 0.084 grams of Dye 1 in 0.08 grams of toluene and 7.92 grams of acetone. From the above suspension of polystyrene beads containing poly(vinyl alcohol) an amount of 8.16 grams was then added slowly (drop-wise) to this solution of the dyes while stirring to prepare a suspension of colored beads. The suspension of colored beads was then filtered using a porous cotton filter, poured into a dialysis bag (12,000 to 14,000 molecular weight cut off) and washed with distilled water for one hour. After washing, the suspension of colored beads was filtered again using a porous cotton filter. The concentration of magenta colored beads in the suspension after this final step was 1.2%.

Suspensions of cyan and orange colored beads were prepared in a similar manner using Dye 2 and Dye 3 (Sudan Orange 220 from BASF corporation) respectively in place of Dye 1. The concentration of colored beads in these suspensions were 1.6% and 1.45% respectively.
Formulations for coating were prepared in the following manner.

### Formulation 1 (invention):

This was prepared by combining 4.0 grams of the suspension of cyan colored beads, 5.33 grams of the magenta colored beads and 4.41 grams of the orange colored beads with 13.91 grams of a 11.5% solution of lime processed ossein gelatin in water, 3.2 grams of coating aid (6.8% solution of Triton X 200E in water) and 49.15 grams of distilled water.

### Formulation 2 (control):

A second formulation for coating was prepared by combining the same amounts cyan, magenta and orange colored beads with 7.27 grams of poly(vinyl alcohol) (GH23 from Nippon Gohsei) and 55.79 grams of water. The amount of coating aid was the same as in formulation 1. The amount of poly(vinyl alcohol) was chosen to match the viscosity of formulation 1 at the higher temperatures (See, below).

Both samples (formulation 1 and formulation 2) were equilibrated in a 50°C water bath for 30 minutes and then analyzed using a Rheometric Fluid Rheometer. Viscosities were determined as a function of temperature by the dynamic oscillatory technique as the samples were cooled at the rate of one degree centigrade per minute.

**TABLE #1**

| Temperature (°C) | Viscosity (centipoise) | |
|---|---|---|
| | Formulation 1 | Formulation 2 |
| 45 | 2.0 | 2.0 |
| 40 | 2.2 | 2.2 |
| 35 | 2.8 | 2.9 |
| 30 | 3.4 | 3.5 |
| 25 | 5.1 | 4.3 |
| 20 | 2107 | 4.6 |
| 15 | 100,000 | 6.0 |
| 10 | 440,000 | 7.9 |

It may be seen from the above data that at the higher temperatures (above about 30°C), both samples behave similarly in terms of the increase in viscosity upon cooling. However, below about 25°C formulation 1 (invention) displays a much more dramatic increase in viscosity because of gelation. Such behavior is not exhibited by formulation 2 (control). The viscosity of formulation 1 increases by several orders of magnitude as the temperature is reduced from 25°C to 10°C. The temperature of onset of gelation is estimated to be 21.8°C.

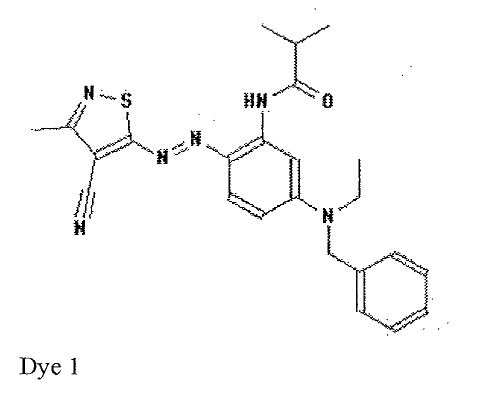

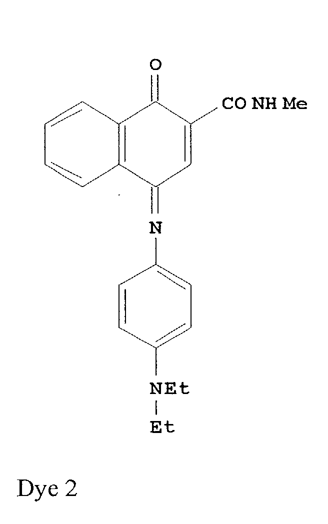

### EXAMPLE 2

This example illustrates the influence of the gelling agent on the uniformity of a coating of colored micro-spheres.

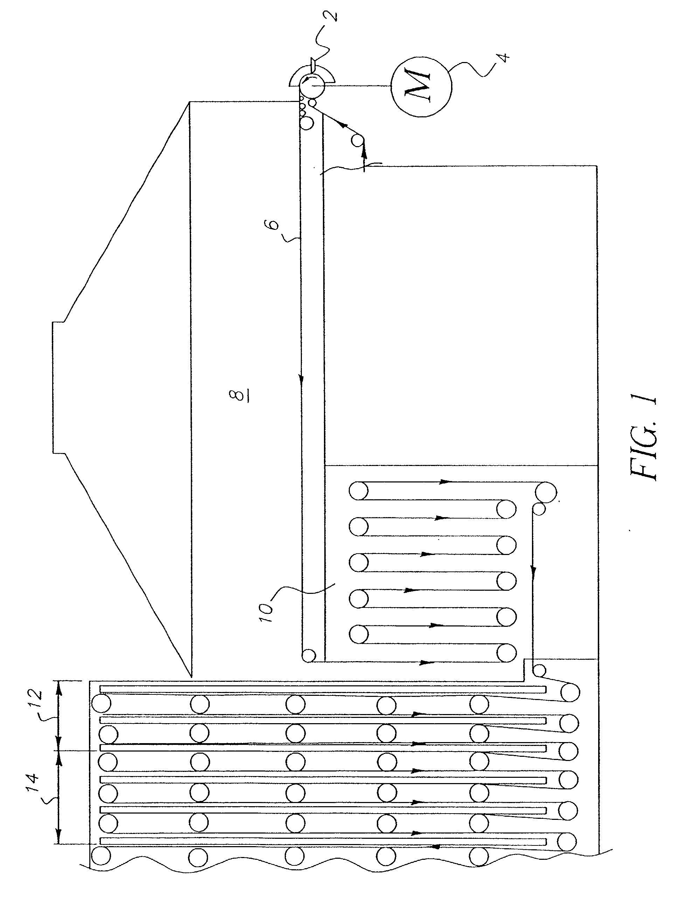

Formulation 1 and formulation 2 from Example 1 were coated on a 0. 18 mm thick substrate of polyethyleneterephthalate (PET) containing 6% by weight titanium dioxide using the coating device shown in Figure 1. The formulations were introduced through a slot coating die **2,** driven by a motor **M 4,** at a temperature of 45°C, on to a 12.7 cm wide web **6** moving at the rate of 3.7 m/min. The flow rate was adjusted to provide a level of 0.043 g/m² for each of the cyan, magenta and orange colored beads. The coatings were chill-set in a 2.4m long chilling section **8** that was maintained at a temperature of 4°C and 56.6% RH and then passed through a conditioning chamber 10 before being dried in a first **12** and then a second **14** drying section that were 9.8m and 11.6m in length respectively. The first drying section **12** was maintained at a temperature of 21°C and 33.2% RH and the second **14** was maintained at a temperature of 37.8°C and 18.6% RH.

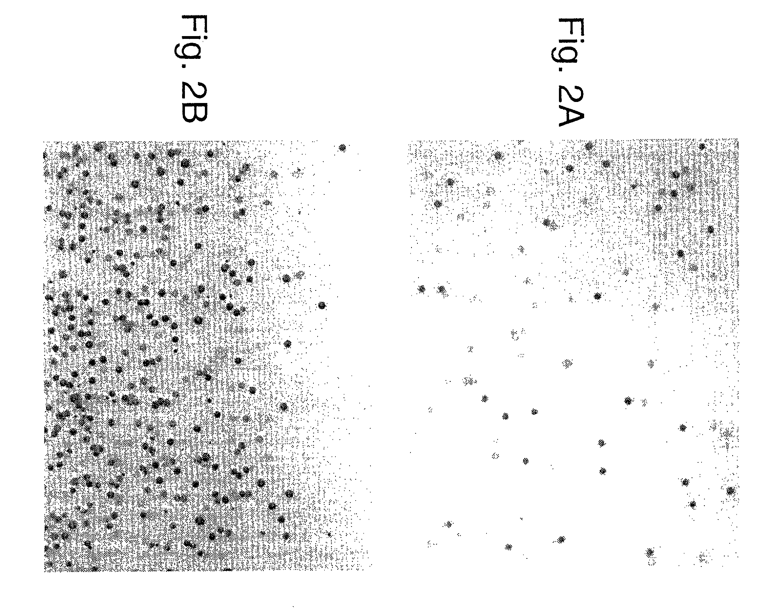

At the end of this process it was found that an extremely uniform coating was obtained with formulation 1 (invention) whereas there were visible streaks in the case of formulation 2 (control). Examination of the coatings by optical microscopy at high magnification (Figure 2) showed that in the invention, the beads were evenly spread over the surface (Figure 2A) giving a uniform density of about 50,000 beads per cm² but the control at lower magnification showed that the macroscopic streaks were composed of lateral aggregates (Figure 2B).

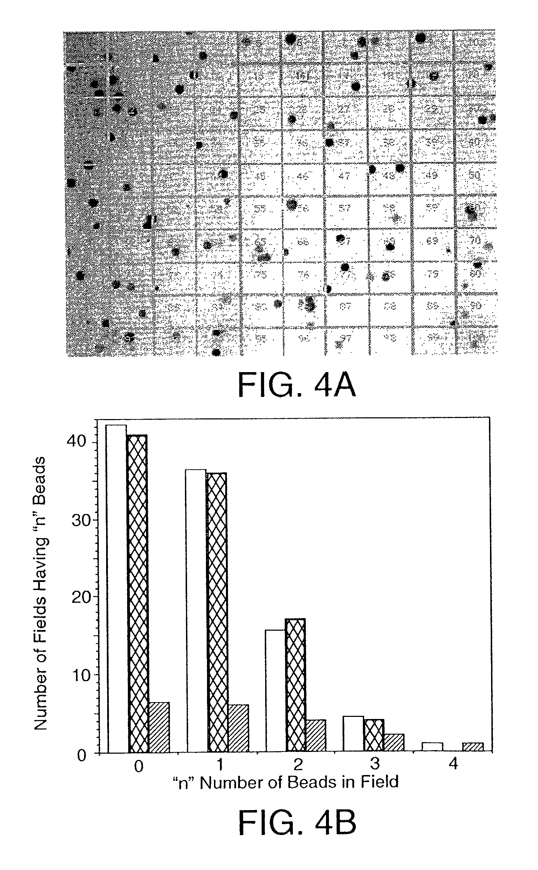

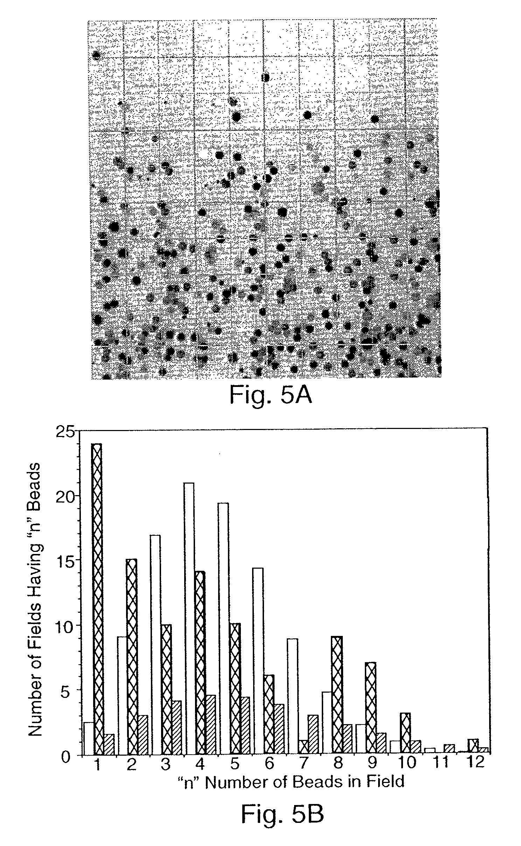

More detailed analysis showed that the distribution of beads in the coating of formulation 1 (invention) conformed to Poisson statistics which is characteristic of a random distribution (Figure 4) whereas this was clearly not the case in the coating of formulation 2 (control) (Figure 5).

Referring now to Figures 4 and 5 where coated colored beads are shown in selected microscope images, Figure 4A corresponds to images of the invention (with gelling agent) and Figure 5A corresponds to images of a control (without gelling agent). The images of colored beads are reduced to simple grayscale and contrasted for clarity. To measure the spatial dispersion of the beads, they are analytically compared to the random dispersion expected if there is no spatial preference for a bead on the coating plane. The analysis is implemented by counting the number of beads that fall within the confines of each field of a grid placed on the image. A random dispersion of beads will conform to a Poisson distribution of numbers of beads among fields: Pₙ(x) = xⁿ e^{-x}/ n!, where "x" is the average number of beads per field over all fields and "n" is the number of fields containing "n" beads. A perfect adherence to "random" can be expected only if an infinite number of beads are counted; however, counting several arbitrary sets of hundreds of beads can clearly distinguish a clustered or structured dispersion from a nearly-random dispersion of beads. An example analysis is shown by the graph in Figure 4B (corresponding to the invention image in Fig 4A) and the graph in Fig. 5B (corresponding to the control image in Fig. 5A). Clear bars indicate the number of fields expected to contain "n" beads for a Poisson distribution of the number of beads and fields; hatched bars show the expected error from counting; solid bars show the actual bead counts. As shown in the graphs, the extent to which the bead dispersion corresponding to the invention adheres to a random dispersion (a Poisson distribution) is well within the expected error. The control dispersion clearly departs from a random distribution of beads.

It is therefore clear that the method of the invention produces the desired well-resolved random distribution of micro-spheres.

### EXAMPLE 4

This example illustrates the attachment of pre-synthesized single strand oligonucleotide probe to the surface of dye incorporated beads, and the detection of hybridization with fluorescently labeled complementary single strand DNA on the surface of such modified beads.

One hundred microliters of Dye 2 (114FN-D89) incorporated beads (4% w/v) was rinsed three times in acetate buffer (0.01 M, pH5.0), and combined with one hundred microliters of 20 mM 2-(4-Dimethylcarbomoylpyridino)-ethane-1-sulfonate and ten percent of polyethyleneimine. The mixture was agitated at room temperature for one hour and rinsed three times with sodium boric buffer (0.05 M, pH8.3). The beads were re-suspended in sodium boric buffer.

A 22-mer oligonucleotide DNA probe with 5'-amino-C6 modification was dissolved in one hundred microliters of sodium boric buffer to a final concentration of 40 nmol. A 20 microliters of cyanuric chloride in acetonitrile was added to the DNA probe solution and the total volume was brought up to 250 microliter using sodium boric buffer. The solution was agitated at room temperature for one hour and then dialyzed against one liter of boric buffer at room temperature for three hours.

A 100 microliters of the dialyzed DNA solution was mixed with 200 microliters of beads suspension. The mixture was agitated at room temperature for one hour and rinsed three times with sodium phosphate buffer (0.01 M, pH7.0). The modified beads were coated onto a microscope glass slide according to formulation 1 as described in Example 2.

A 22-mer oligonucleotide DNA with 5'-fluorescein labeling, which has complementary sequence to the 22-mer DNA probe, was dissolved in a hybridization solution containing 0.9 M NaCl, 0.06 M NaH₂PO₄, 0.006 M EDTA, and 0.1% SDS, pH 7.6 (6XSSPE-SDS) to a final concentration of 1M. The bead coated glass slide was hybridized in the hybridization solution starting at 68°C and slowly cooled down to room temperature. Following hybridization, the slide was washed in 0.5XSSPE-SDS for 15 minutes. The fluorescence image was acquired using Olympus BH-2 microscope (Diagnostic Instruments, Inc. SPOT camera, CCD resolution of 1315 x 1033 pixels) with DPlanapo40 UV objective, mercury light source, blue excitation & barrier filters.

## Claims

1. A coating composition for making a microarray comprising:
a gelling agent or a precursor to a gelling agent and microspheres dispersed in a fluid;
wherein, upon coating the composition on a substrate, said microspheres become immobilized in the plane of coating and form a random pattern on the substrate.

2. A coating composition according to claim 1 wherein said substrate is **characterized by** an absence of specific sites capable of interacting physically or chemically with the microspheres.

3. A coating composition according to claim 1 wherein the microspheres can bear surface active sites.

4. A microarray comprising:
a substrate coated with a composition comprising microspheres dispersed in a fluid containing a gelling agent or a precursor to a gelling agent,
wherein the microspheres are immobilized at random positions on the substrate.

5. A microarray according to claim 4 wherein the substrate is free of receptors designed to physically or chemically interact with the microspheres.

6. A microarray according to claim 4 wherein the microspheres bear chemically active sites.

7. A microarray according to claim 4 wherein the chemically active site is bioactive.

8. A method of making a microarray comprising the steps of:
-- providing a substrate;
-- coating on the substrate a composition containing microspheres and a gelling agent or precursor to a gelling agent;
wherein said composition is fluid during coating and the microspheres become randomly immobilized in the plane of the coating due to sol-gel transition; and
wherein the substrate is **characterized by** an absence of specific sites designed to interact physically or chemically with the microspheres.

9. A method according to claim 8 wherein said sol-gel transition occurs without the coating undergoing a drying process.

10. A method of making a microarray comprising the steps of:
-- providing a substrate; and
-- coating on the substrate a composition according to claim 1;
wherein said composition is fluid during coating and the microspheres become randomly immobilized in the plane of the coating due to sol-gel transition.
